# EUROPEAN PATENT APPLICATION

(11) **EP 0 634 442 A1**
(43) Date of publication of application: **18.01.1995**
(21) Application number: 94201982.9
(22) Date of filing: 08.07.1994
(51) Int. Cl.: C08J 3/28

(54) **Improved process for radiation cured conjugated diene-vinyl aromatic hydrocarbon copolymers**

(30) Priority: 12.07.1993 US 90854
(71) Applicant: SHELL INTERNATIONALE RESEARCH MAATSCHAPPIJ B.V., NL-2596 HR Den Haag (NL)
(72) Inventor: Masse, Michael Alan, Richmond, Texas 77469 (US); Erickson, James Robert, Katy, Texas 77450 (US)

(57) **Abstract**

In a process of curing epoxidized polymers of conjugated dienes which contain aromatic moieties by exposing the polymers to ultraviolet radiation in the presence of a photoinitiator, the improvement which comprises reducing the amount of irradiation necessary to achieve an effective cure by adding a small but effective amount of a photosensitizer which absorbs UV radiation in a wavelength range which is not obscured by the polymer to the polymer prior to or during irradiation.

## Description

This invention relates to radiation cured conjugated diene-vinyl aromatic hydrocarbon block copolymers which are cured at low radiation doses. More particularly, the invention relates to improved cross-linking of such epoxidized polymers.

Curing of adhesives based on conjugated diolefins and vinyl aromatics has increased the range of service properties for such adhesives. Radiation curing of polymers to make such adhesives is known. Curing of coatings and sealants based on these polymers has reduced solvent content required for such products. This curing causes covalent cross-linking of the polymerized conjugated diolefins which is evidenced by a high gel content of the cross-linked polymer. Before cross-linking, the polymers are melt and solution processable but after cross-linking, the gel cannot be processed as melts or in solution. Cross-linking therefore enhances solvent resistance and improves elevated temperature shear properties, toughness and cohesion. Compositions can therefore be applied to a substrate in a melt or from solution and then cross-linked to form a superior adhesive, coating or sealant. However, improvements in the adhesives, coatings and sealants could be made if the adhesives could be cured at lower dosages of radiation.

Epoxidized block copolymers of conjugated diolefins and vinyl aromatic hydrocarbons have been disclosed as being useful in radiation cured adhesive, coating and sealant compositions (see allowed copending application Serial No. 692,839, filed April 29, 1991, entitled "Viscous Conjugated Diene Block Copolymers"). Such polymers were said to be curable using electron beam and ultraviolet radiation. It has been found that epoxidized polymers of conjugated dienes which also contain aromatic moieties require much more irradiation when ultraviolet radiation is used to cure the polymers than such polymers which do not contain aromatic moieties. Such aromatic moieties may be provided by a vinyl aromatic hydrocarbon monomer which is copolymerized with the conjugated diene or they may be provided when an aromatic coupling agent such as divinyl benzene is used to couple polymer arms together.

Radiation curing of such polymers is not an inexpensive process. Increasing the amount of irradiation necessary to cure a polymer increases the overall cost of producing the product. Therefore, it would be advantageous to provide a method wherein epoxidized diene polymers which contain aromatic moieties could be cured to the same extent with approximately the same amount of irradiation as is necessary to cure epoxidized diene polymers which do not contain aromatic moieties. The present invention provides such a process.

This invention is an improvement upon the process for curing epoxidized polymers of conjugated dienes by exposing the polymers or a formulation containing such polymers to ultraviolet radiation in the presence of a photoinitiator. The epoxidized polymers of the present invention contain aromatic moieties which may be present as a result of copolymerization of a vinyl aromatic hydrocarbon monomer or as a result of the use of an aromatic coupling agent such as divinyl benzene. The present invention is also used when an epoxidized diene polymer which does not contain aromatic moieties is formulated with an aromatic additive such as an aromatic antioxidant or an aromatic resin. The improvement comprises reducing the amount of irradiation necessary to achieve an effective cure by adding a small but effective amount of a photosensitizer, which absorbs UV radiation in a wavelength range which is not obscured by the polymer or aromatic additives, to the polymer prior to or during irradiation. It is preferred that the amount of the photosensitizer range from 0.05 to 0.5 parts per hundred polymer. The preferred type of photosensitizer is thioxanthene and halogen and alkyl derivatives thereof.

Polymers containing ethylenic unsaturation can be prepared by copolymerising one or more olefins, particularly diolefins, by themselves or with one or more alkenyl aromatic hydrocarbon monomers. The copolymers may, of course, be random, tapered, block or a combination of these, as well as linear, star or radial.

The polymers containing ethylenic unsaturation or both aromatic and ethylenic unsaturation may be prepared using anionic initiators or polymerization catalysts. Such polymers may be prepared using bulk, solution or emulsion techniques. In any case, the polymer containing at least ethylenic unsaturation will, generally, be recovered as a solid such as a crumb, a powder, a pellet or the like, but it also may be recovered as a liquid such as in the present invention. Polymers containing ethylenic unsaturation and polymers containing both aromatic and ethylenic unsaturation are available commercially from several suppliers.

In general, when solution anionic techniques are used, copolymers of conjugated diolefins and alkenyl aromatic hydrocarbons are prepared by contacting the monomer or monomers to be polymerized simultaneously or sequentially with an anionic polymerization initiator such as group IA metals, their alkyls, amides, silanolates, naphthalides, biphenyls or anthracenyl derivatives. It is preferred to use an organo alkali metal (such as sodium or potassium) compound in a suitable solvent at a temperature within the range from about -150 °C to about 300 °C, preferably at a temperature within the range from about 0 °C to about 100 °C. Particularly effective anionic polymerization initiators are organo lithium compounds having the general formula:

RLiₙ

wherein R is an aliphatic, cycloaliphatic, aromatic or alkyl-substituted aromatic hydrocarbon radical having from 1 to about 20 carbon atoms and n is an integer of 1 to 4.

Conjugated diolefins which may be polymerized anionically include those conjugated diolefins containing from about 4 to about 24 carbon atoms such as 1,3-butadiene, isoprene, piperylene, methylpentadiene, phenyl-butadiene, 3,4-dimethyl-1,3-hexadiene, 4,5-diethyl-1,3-octadiene and the like. Isoprene and butadiene are the preferred conjugated diene monomers for use in the present invention because of their low cost and ready availability. Alkenyl aromatic hydrocarbons which may be copolymerized include vinyl aryl compounds such as styrene, various alkyl-substituted styrenes, alkoxy-substituted styrenes, vinyl naphthalene, alkyl-substituted vinyl naphthalenes and the like.

These polymers are epoxidized and, whether they are hydrogenated or not, it is preferred that the epoxidation take place only to the extent that about 0.1 to about 3 milliequivalents of epoxide per gram of polymer (0.1 to 3 Meq epoxide/g) are generated. Hence, the preferred epoxidized polymer has an epoxide equivalent weight of between about 10,000 and about 333. The polymers may then be cross-linked through at least some of the epoxy functionality, preferably, by radiation.

Preferred block copolymers which are useful in the present invention have the formula

(A-B-Aₚ)ₙ-Yᵣ-(A_{q}-B)ₘ

wherein Y is a coupling agent or coupling monomers, and wherein A and B are polymer blocks which may be homopolymer blocks of conjugated diolefin monomers, copolymer blocks of conjugated diolefin monomers or copolymer blocks of diolefin monomers and monoalkenyl aromatic hydrocarbon monomers. An aromatic moiety, whether in the form of a comonomer or coupling agent, must be present in the polymer (or an aromatic additive must be in the polymer formulation). Generally, the A blocks should have a greater concentration of more highly substituted aliphatic double bonds than the B blocks have. The A blocks will have a greater concentration of di-, tri-, or tetra-substituted aliphatic double bonds. For example, in one embodiment, the A blocks will have a greater number of tertiary unsaturation (TU) sites per unit of block mass than the B blocks, where a TU site is defined to be an olefinic double bond (ODB) between a tertiary carbon atom and either a primary or secondary carbon atom. The A blocks have a molecular weight of from 100 to 3,000 and the B blocks have a molecular weight of from 1000 to 15,000. n is greater than 0, r is 0 or 1, m is greater than or equal to 0, and n + m ranges from 1 to 100. p and q may be 0 or 1. When either p or q or both are 1, extra TU sites are available in the interior of the polymer chain.

The polymers described immediately above are relatively low molecular weight low viscosity materials. Higher molecular weight higher viscosity epoxidized polymers containing aromatic moieties may also be used to advantage according to the present invention. Indeed, the epoxidized diene block copolymers of the present invention may have molecular weights of from 3000 to 3,000,000. Lower molecular weight materials require excessive cross-linking whereas higher molecular weight materials are very difficult to apply to a substrate by melt or other means. Blocks comprising predominantly conjugated diolefin monomer units generally will have molecular weights between 300 and 200,000 prior to epoxidation and, if present, blocks comprising predominantly aromatic monomer units will have molecular weights between 500 and 50,000 because polymers built from larger blocks are very difficult to apply and smaller blocks fail to adequately localize covalent or physical cross-linking.

Other useful block copolymers containing aromatic moieties are based on at least one conjugated diolefin monomer, contain a greater concentration of di-, or tri-, or tetrasubstituted olefinic epoxides in the exterior blocks, and lesser concentrations of these epoxides in the interior blocks of the polymer. The exterior blocks generally contain such epoxides within the concentration range of 0.2 to 10 milliequivalents of exterior block and the ratio of the concentration such epoxide groups in the exterior blocks to the concentration in the interior blocks is at least 3:1. The molecular weight of the exterior blocks ranges from 3000 to 50,000 and the molecular weight of the interior blocks ranges from 15,000 to 200,000. A special case is where the exterior blocks are formed of polyisoprene polymerized under conditions that yield primarily 1,4-polyisoprene (trisubstituted) and the interior blocks are of polybutadiene (mono- or disubstituted). Another special case is where the exterior block is a random polystyrene-polyisoprene copolymer in which a majority of the polyisoprene is 1,4-polyisoprene and the interior block is polybutadiene. Such polymers give the advantage of localizing the cross linking in the exterior blocks.

In general, any of the solvents known in the prior art to be useful in the preparation of such polymers may be used. Suitable solvents, then, include straight and branched chain hydrocarbons such as pentane, hexane, heptane, octane and the like, as well as, alkyl-substituted derivatives thereof; cycloaliphatic hydrocarbons such as cyclopentane, cyclohexane, cycloheptane and the like, as well as alkyl-substituted derivatives thereof; aromatic and alkyl-substituted derivatives thereof; aromatic and alkyl-substituted aromatic hydrocarbons such as benzene, naphthalene, toluene, xylene and the like; hydrogenated aromatic hydrocarbons such as tetralin, decalin and the like; linear and cyclic ethers such as methyl ether, methylethyl ether, diethyl ether, tetrahydrofuran and the like.

A wide variety of coupling agents can be employed. Any polyfunctional coupling agent which contains at least two reactive sites can be employed. Examples of the types of compounds which can be used include the polyepoxides, polyisocyanates, polyimines, polyaldehydes, polyketones, polyanhydrides, polyesters, polyhalides, and the like. These compounds can contain two or more types of functional groups such as the combination of epoxy and aldehyde groups, isocyanate and halide groups, and the like. When the coupling agent has two reactive sites such as dibromoethane, the polymer will have a linear ABA structure. When the coupling agent has three or more reactive sites, such as silicon tetrachloride, the polymer will have a branched structure, such as (AB)ₙY. Coupling monomers are coupling agents where several monomer units are necessary for every chain end to be coupled. Divinylbenzene is the most commonly used coupling monomer and results in star polymers.

If a substantially saturated polymer is desired, the epoxidized polymer is hydrogenated to remove substantially all remaining olefinic double bonds (ODB) and normally leaving substantially all of the aromatic double bonds. If only substantially saturated interior blocks are desired, the epoxidized polymer may be partially hydrogenated in a selective manner with a suitable catalyst and conditions that favour the hydrogenation of the less substituted olefinic double bonds (rate or hydrogenation: monosubstituted > disubstituted > tri-substituted > tetrasubstituted olefinic double bonds) and also leaves aromatic double bonds intact, so as to saturate the B blocks and leave some or all of the unsaturation intact in the A blocks and/or any portions of the optional M block or the C arms that may also contain unepoxidized higher substituted olefinic double bonds.

Alternatively, selective partial hydrogenation of the polymer may be carried out before epoxidation such that between 0.2 and 11.6 Meq of olefinic double bonds are left intact, as required of an A block for subsequent epoxidation. Fully epoxidizing 11.6 Meq of ODB per gram of polymer gives 10.0 Meq of epoxide per gram of the final polymer because of a 16% weight gain due to the added oxygen. If selective partial hydrogenation is done first, the epoxidation does not need to be selective with respect to the degree of substitution on the olefinic double bonds, since the objective is usually to epoxidize as many of the remaining ODB's as possible. After hydrogenation, it is preferred that the ratio of ODB's in the A blocks to that in the B blocks be at least 3:1.

Generally, if a hydrogenation step is used, sufficient improvement of the polymer's chemical and heat stability should be achieved to justify the extra expense and effort involved, and this generally means at least saturating the interior blocks B to the point that they have less than 1 Meq of olefinic double bonds per gram of B left intact. For greatest heat stability, all of the olefinic double bonds, anyplace in the polymer, that are not epoxidized should be removed so that less than 1 Meq of ODB per gram of polymer remain, more preferably less than 0.6 Meq/g, and most preferably less than about 0.3 Meq/g of polymer.

Epoxidation of the base polymer can be effected by generally known methods such as by reaction with organic peracids which can be performed or formed in situ. Suitable preformed peracids include peracetic and perbenzoic acids. In situ formation may be accomplished by using hydrogen peroxide and a low molecular weight fatty acid such as formic acid. Alternatively, hydrogen peroxide in the presence of acetic acid or acetic anhydride and a cationic exchange resin will form a peracid. The cationic exchange resin can optionally be replaced by a strong acid such as sulphuric acid or p-toluenesulfonic acid. The epoxidation reaction can be conducted directly in the polymerization cement (polymer solution in which the polymer was polymerized) or, alternatively, the polymer can be redissolved in an inert solvent such as toluene, benzene, hexane, cyclohexane, methylene-chloride and the like and epoxidation conducted in this new solution or can be epoxidized neat. Epoxidation temperatures on the order of 0 to 130 °C and reaction times from 0.1 to 72 hours may be utilized. When employing hydrogen peroxide and acetic acid together with a catalyst such as sulphuric acid, the product can be a mixture of epoxide and hydroxy ester. The use of peroxide and formic acid in the presence of a strong acid may result in diolefin polymer blocks containing both epoxide and hydroxy ester groups. Due to these side reactions caused by the presence of an acid, it is preferable to carry out the epoxidation at the lowest possible temperature and for the shortest time consistent with the desired degree of epoxidation.

Epoxidation may also be accomplished by treatment of the polymer with hydroperoxides in the presence of transition metals such as Mo, W, Cr, V and Ag. Epoxy functionality may also be created by direct oxidation of ethylenic unsaturation by O₂ in the presence of tetra cyanoethylene. A temperature of about 150 °C and an oxygen partial pressure of about 58 atmospheres is suitable for this reaction.

The epoxidized polymers may then be formulated for their specific applications. The present invention embodies the use of photoinitiator/photosensitizer systems with aromatic formulation ingredients. Resins and antioxidants are such formulating ingredients.

Examples of aromatic resins useful in the formulation of epoxidized diene polymers are AMOCO 18 (AMOCO is a trademark) series resins, which are composed of alpha methyl styrene, Kristalex (Kristalex is a trade mark) series resins, which are composed of alpha methyl styrene, PICCOTEX (PICCOTEX is a trade mark) Series resins, which are composed of alpha methyl styrene and vinyl toluene, NEVCHEM (NEVCHEM is a trade mark) and PICCO 6000 (PICCO is a trade mark) series resins, which are composed of aromatic hydrocarbons, CUMAR (CUMAR is a trade mark) series resins and CUMAR LX-509, which are composed of coumarone-indene, PICCOVAR AP (PICCOVAR is a trade mark) AP series resins, which are composed of alkyl aryl species, PICCOVAR 130, which is an alkyl aromatic poly indene resin, and PICCOFYN A100 (PICCOFYN is a trade mark), which is a terpene phenolic resin.

Examples of aromatic antioxidants useful in the formulation of epoxidized diene polymers are ULTRANOX 626 (ULTRANOX is a trade mark) (GE Chemicals), bis(2,4-di-t-butylphenyl) pentaerythritol diphosphite, 1,3,5-trimethyl-2,4,6-tris(3,5-di-t-butyl-4-hydroxybenzyl)benzene, 2,4-bis(n-octylthio)-6-(4-hydroxy-3,5-di-t-butylanilino)-1,3,5-triazine, 2,2-bis[[3-[3,5-bis-(1,1-dimethylethyl)-4-hydroxyphenyl]-1-oxopropoxy] methyl]-1,3-propanediyl-3,5-bis(1,1-dimethyl ethyl)-4-hydroxybenzeneproprionate, octadecyl-3-(3',5'-di-t-butyl-4'-hydroxyphenyl)proprionate, trinonyl-phenyl-phoshite, and butylated hydroxytoluene.

The process of the present invention involves the use of ultraviolet light to cure the polymers described above which contain aromatic moieties. Ultraviolet light sources may be based on the mercury-vapour arc. Mercury is enclosed in a quartz tube and a potential is applied to electrodes at either end of the tube. The electrodes can be of mercury, iron, tungsten or other metals.

The presence of water in the polymer composition during the radiation cross-linking is undesirable due to the tendency of water to terminate the cross-linking. The radiation curing is therefore generally more effective if the polymeric composition is at a temperature near or above the boiling point of water at the time of the radiation curing.

When using non-ionizing radiation it is necessary to employ a photoinitiator to initiate the cross-linking reaction. Useful photoinitiators include diaryliodonium, alkoxy-substituted diaryliodonium, alkyl substituted diaryliodonium, triarylsulfonium, dialkylphenacylsulfonium, and dialkyl-4-hydrophenylsulfonium salts. The anions in these salts generally possess low nucleophilic character and include SbF₆-, BF₄-, PF₆- and AsF₆-. Specific examples include (4-octyloxyphenyl)-phenyl-iodium hexa fluoroantimonate, UVI-6990 (from Union Carbide), FX-512 (3M Company), UVI-6974, an aryl sulfonium salt (Union Carbide), and UV9310C, alkyl-substituted aryl iodonium salt.

As has been discussed above, we have found that epoxidized polymers and epoxidized polymer formulations containing aromatic additives containing aromatic moieties do not cure as well using ultraviolet radiation with a photoinitiator as epoxidized polymers and epoxidized polymer formulations which do not contain aromatic moieties. We have also found that we can decrease the amount of irradiation necessary to cure epoxidized polymers and epoxidized polymer formulations containing aromatic moieties dramatically by the addition of a photosensitizer to the polymer prior to or during the irradiation treatment.

The amount of photosensitizer necessary is very small. The only requirement is that it be great enough to be effective in absorbing ultraviolet light in a wave length region which is not obscured by the aromatic moieties in the polymer or the formulation. It is theorized that the aromatic moieties present in these polymers or formulations absorb the ultraviolet light and prevent the radiation from activating the photoactive photoinitiator compound. The presence of the photosensitizer which is activated by ultraviolet light of a different wave length provides a species which absorbs this ultraviolet radiation and then is required to transfer its absorbed energy to the photoinitiator which then goes on to generate a cation to initiate cross-linking of the epoxy groups. This is the function of the photosensitizer. The preferred photosensitizer absorbs UV radiation in the range of 300 to 450 nm. It is preferred that the photosensitizer be used in an amount from 0.05 to 0.5 parts per hundred polymer because at the lower limit its effectiveness is minimized and at the upper limit the effectiveness is maximized and higher levels become economically impractical. If the polymer, with or without aromatic moieties, is incorporated into a formulation with additives which absorb UV radiation in the range of 200 to 350 nm, the photosensitizer should be used in an amount of 0.05 to 0.5 weight percent of the formulation.

It is important that the photoinitiator/photosensitizer/polymer system be suitably matched. The photoinitiator must be able to accept energy in the range dictated by the photosensitizer and both must be suitably compatible with the polymer matrix. For instance, while perylene is well known as a photosensitizer we have found it to be ineffective for enhancing cross-linking of epoxidized diene polymers when matched with Cyracure UVI-6974 (Union Carbide). Generally, the effective photoinitiator/photosensitizer/polymer system is chosen through experimentation.

Examples of photosensitizers include thioxanthone and its halo- and alkyl-derivatives, anthracene, perylene, phenothiazione, 1,2-benzathracene, coronene, pyrene, benzophenone, phenothiazine, acetophenone and tetracene. Thioxanthone and its derivaties are preferred. The most preferred photosensitizer is 2-chlorothioxanthen-9-one because it is effective in sensitizing commercially available alkyl-aryl-iodonium salts and these salts have been found to be advantageously compatible with epoxidized diene polymers. The photoinitiator and photosensitizer are chosen to be compatible with the polymer being cross-linked and the light source available.

Reactive (radiation curable) diluents that can be added to the polymer include alcohols, vinyl ethers, epoxides, acrylate and methacrylate monomers, oligomers and polymers. They may also be blended with other diene-based polymers. Examples of epoxides include bis(2,3-epoxy cyclopentyl)ether, vinyl cyclohexene dioxide, limonene dioxide, vernonia oil, epoxidized soya and linseed oils and fatty acids.

The cross-linked materials of the present invention are useful in adhesives (including pressure sensitive adhesives, contact adhesives, laminating adhesives and assembly adhesives), sealants, coatings, films (such as those requiring heat and solvent resistance), etc. However, it may be necessary for a formulator to combine a variety of ingredients together with the polymers of the present invention in order to obtain products having the proper combination of properties (such as adhesion, cohesion, durability, low cost, etc.) for particular applications. Thus, a suitable formulation might contain only the polymers of the present invention and the curing agent. However, in most adhesive coating and sealant applications, suitable formulations would also contain various combinations of resins, plasticizers, fillers, solvents, stabilizers and other ingredients such as asphalt. The following are some typical examples of the UV curing of neat polymers which, by themselves, may be useful for adhesives, coatings and sealants.

### Example

204 is a linear isoprene-styrene/butadiene-isoprene molecule containing 38.7% styrene. It has been partially hydrogenated and then epoxidized. 205 is an isoprene-butadiene star polymer which has been coupled with divinylbenzene (DVB). It also has been partially hydrogenated and then epoxidized. 103 is a radial isoprene-butadiene polymer which has been coupled using silicon tetrachloride. It has been epoxidized.

Aromatic units have been incorporated into both 204 and 205. 103 does not have any aromatic units incorporated into its chain structure. 204 strongly absorbs UV light in the range of 200-300 nm. This UV absorption is attributed to the presence of styrene-monomer units in the polymer chain structure. 205 also absorbs in the same wavelength range. However, the absorption is considerably weaker. The absorption in this polymer is attributed to the presence of DVB in the star core. The level of DVB amounts to 6 wt% of the total polymer. Thus, the amount of aromatic monomer is less in 205 than in 204. The absorption spectrum of 103 shows that this polymer absorbs essentially no UV radiation in the range of 250-300 nm.

UV-9310C is an alkyl substituted aryl iodonium hexafluoroantimonate from GE Chemicals. It was used to cross link these polymers. The initiator absorbs in the range 200-300 nm. Thus, 204 and 205 will act to filter some portion of the radiation necessary to activate the photoinitiators.

Experiments were undertaken to study the effect of a photosensitizer on the UV cross-linking of these polymers. In general, photosensitizers absorb UV radiation in a spectral region free of other absorptions and then transfer the absorbed energy to the photoinitiator to start cross-linking. One photosensitizer, 2-chloro-thioxanthen-9-one (CTX), was used in combination with iodonium salt initiators. The mechanism of the photosensitization is thought to be excitation of the sensitizer and subsequent electron transfer to the iodonium salt photoinitiator. The photoinitiator then decomposes to generate a cation which begins the cross-linking reaction. CTX absorbs strongly in the region 350-450 nm. This region is free of absorptions of both the polymers and the photoinitiator used which was 0.5 parts per hundred polymer UV-9310C photoinitiator. 0.0 or 0.1 parts CTX photosensitizer were used. The formulations were made in THF.

Films were cast on poly(ethylene terephthalate) film. After air drying in the dark and a 2 minute bake at 120 °C the films were irradiated using a Linde Photocure System PS-2000-1HD. A prefocused, full spectrum bulb provided 800 Watts/ft in the spectral range 185-400 nm. The irradiation was carried out at both 9 and 27 m.min⁻¹. The films were then baked for 10 minutes at 120 °C. The gel fraction of the irradiated polymers was then measured using a standard technique. The results are listed in Tables I and II.

**Table I**

| UV Initiated Cure Effect of Photosensitizer (2-chlorothioxanthen-9-one, CTX) | | |
|---|---|---|
| Polymer | Photosensitizer Level (phr) | Gel Fraction |
| 103 | 0.0 | 0.97 |
| 103 | 0.1 | 0.98 |
| 204 | 0.0 | 0.55 |
| 204 | 0.1 | 0.44 |
| 205 | 0.0 | 0.67 |
| 205 | 0.1 | 0.75 |
| photoinitiator: UV9310C, aryl iodonium hexafluoroantiomonate, 0.5 phr source: medium pressure UV bulb line speed: 9 m.min⁻¹ | | |

**Table II**

| UV Initiated Cure Effect of Photosensitizer (2-chlorothioxanthen-9-one, CTX) | | |
|---|---|---|
| Polymer | Photosensitizer Level (phr) | Gel Fraction |
| 103 | 0.0 | 0.81 |
| 103 | 0.1 | 0.76 |
| 204 | 0.0 | 0.09 |
| 204 | 0.1 | 0.63 |
| 205 | 0.0 | 0.11 |
| 205 | 0.1 | 0.50 |
| photoinitiator: UV9310C, aryl iodonium hexafluoroantiomonate, 0.5 phr source: medium pressure UV bulb line speed: 27 m.min⁻¹ | | |

The experiment carried out at the slower speed provided more irradiation to the polymers. It can be seen that the gel fractions of the samples containing styrene either decreased or did not increase very much at this higher level of irradiation.

However, the results were quite different at the faster line speed which provided much less irradiation. When no photosensitizer is present only 103 is cross-linked to a significant degree. Upon incorporation of 0.1 phr CTX the gel fraction of 204 is improved from 0.09 to 0.63. Likewise, the gel fraction of 205 is improved from 0.09 to 0.50. The gel fraction of 103 is essentially unchanged by incorporation of the photosensitizer. At this low level of irradiation, the limiting gel fraction of 204 and 205 is approached when the photosensitizer is present. When it is not present, only impratically low levels of gel are produced. These results show that the photosensitizer in conjunction with the photoinitiator significantly enhanced the cure rate of epoxidized polymers which contain UV absorbing aromatic segments.

## Claims

1. In a process of curing epoxidized polymers of conjugated dienes which contain aromatic moieties by exposing the polymers or a formulation containing such polymers to ultraviolet radiation in the presence of a photoinitiator, the improvement which comprises reducing the amount of irradiation necessary to achieve an effective cure by adding a small but effective amount of a photosensitizer which absorbs UV radiation in a wavelength range which is not obscured by the polymer to the polymer prior to or during irradiation.

2. The process of claim 1 wherein the amount of the photosensitizer used ranges from 0.05 to 0.5 parts per hundred polymer.

3. The process of claim 1 wherein the photosensitizer absorbs UV radiation in the range of 300 to 450 nm.

4. The process of claim 3 wherein the photosensitizer is selected from the group consisting of thioxanthone and its alkyl- and halo-derivatives.

5. The process of claim 3 wherein the photoinitiator is an aryl iodonium salt.

6. The process of claim 3 wherein the photoinitiator is an aryl sulfonium salt, or an alkyl-aryl iodonium salt or perylene, thioxanthone, alkyl-thioxanthones, or halo-thioxanthones.

7. The process of any one of claims 1 to 6 wherein the polymer is an epoxidized star polymer containing aromatic coupling agents.
